# EUROPÄISCHE PATENTSCHRIFT

(11) **EP 1 243 223 B1**
(45) Veröffentlichungstag und Bekanntmachung des Hinweises auf die Patenterteilung: **23.11.2005**
(21) Anmeldenummer: 02005339.3
(22) Anmeldetag: 14.03.2002
(51) Int. Cl.: A61C 1/00

(54) **Fussschalter**
Foot switch
Commutateur à pied

(30) Priorität: 23.03.2001 DE 10114333
(43) Veröffentlichungstag der Anmeldung: 25.09.2002
(73) Patentinhaber: Ferton Holding SA, 2800 Delémont (CH)
(72) Erfinder: Beerstecher, Lutz, 1277 Borex (CH)
(74) Vertreter: Müller, Frank Peter

(56) Entgegenhaltungen:
- DE-A- 2 724 051
- DE-A- 3 105 875
- DE-C- 19 743 524
- US-A- 4 041 609
- US-A- 4 114 275
- US-B1- 6 179 829

## Beschreibung

Die Erfindung bezieht sich auf einen Fußschalter, der zum Bedienen von wenigstens zwei verschiedenen Funktionsteilen eines mit dem Schalter operativ verbundenen Dentalgerätes eingerichtet ist.

Aus der US-PS 4 114 275 ist ein relativ flach ausgebildeter Fußschalter bekannt, der eine für eine Auflage auf dem Fußboden in der Nähe des Dentalgerätes bestimmte kreisrunde Grundplatte aufweist, an welcher eine Membrane fluiddicht befestigt ist, um für den Fußschalter eine mit einem Hohlraum ausgebildete pneumatische Druckkammer veränderlichen Volumens zu erhalten. Die Membrane ist dafür noch an einer kreisrunden Abdeckplatte befestigt, die eine zu der Grundplatte relativ bewegliche Anordnung aufweist und durch eine mittige Druckfeder nach oben vorgespannt ist. Bei einer Fußbetätigung der Abdeckplatte wird der von der Membrane umgebene Hohlraum entgegen der Kraft der Druckfeder volumenmäßig verkleinert. Dadurch wird ein pneumatisches Drucksignal erzeugt, das über eine mit dem Hohlraum verbundene Signalleitung an pneumatische Schaltventile des Dentalgerätes weitergeleitet wird. Durch die Schaltventile werden verschiedene funktionelle Schaltsignale bereitgestellt, mit denen Funktionsteile des Dentalgerätes gesteuert werden. Die Funktionsteile können auch einen elektronischen Steuerkreis aufweisen, der an einem Eingangsschalter pneumatisch betätigt wird.

Aus der DE 31 05 875 A1 ist ein kastenförmiger Fußschalter mit vier relativ zu einer rechteckförmigen Grundplatte beweglichen Pedalen bekannt, die paarweise unterschiedlich groß ausgebildet sind für eine wahlweise Steuerung von zwei zahnärztlichen Instrumenten und von verstellbaren Teilen eines Patientenstuhles. Die Pedale sind über eine Logikschaltung mit einem Steuerkreis für die Instrumente sowie mit einem weiteren Steuerkreis für die verstellbaren Teile des Patientenstuhles verknüpft. Die Kastenform des Fußschalters ergibt eine wenig stolpersichere Ausbildung neben einer ungünstigen Erreichbarkeit der paarweise unmittelbar nebeneinander angeordneten Pedale, deren Betätigung daher nicht optimal funktionssicher ist.

Der Erfindung liegt die Aufgabe zugrunde, einen Fußschalter der eingangs genannten Art bereitzustellen, der möglichst flach und stolpersicher ausgebildet werden kann und gleichzeitig eine funktionssichere Betätigung auch von mehreren angeschlossenen Funktionsteilen eines Dentalgerätes erlaubt.

Diese Aufgabe wird erfindungsgemäß bei einem Fußschalter der angegebenen Art mit den Merkmalen gelöst, die durch den Patentanspruch 1 angegeben sind.

Bei dem erfindungsgemäßen Fußschalter wird durch eine Ausbildung der Druckschalter als Membranschalter mit jeweils einer gedruckten Leiterbahn in einer Anordnung zwischen zwei auf der Grundplatte des Schalters aufliegenden und randseitig miteinander fluiddicht verbundenen Trägerfolien eine äußerst flache und daher entsprechend stolpersichere und auch trittsichere Ausbildung des Schalters erhalten. Daneben wird auch eine einfache Fertigung des Fußschalters ermöglicht und der Vorteil einer minimalen Störanfälligkeit erreicht, die auch dann gegeben ist, wenn der Fußschalter eine Ausbildung mit mehreren Druckschaltern für eine Betätigungsmöglichkeit einer entsprechend vermehrten Anzahl von Funktionsteilen erhalten soll. Die Ausbildung des Fußschalters ermöglicht es dabei auch, daß bei einer vorgesehenen Mehrzahl von Druckschaltern eine Gefahr von fehlerhaft ausgelösten Betätigungen der verschiedenen, mit den Druckschaltern ansteuerbaren Funktionsteile durch eine unterschiedlich angepaßte Anordnung sowie Verteilung der Druckschalter unterhalb des Betätigungsfeldes der Abdeckplatte weitgehend eingegrenzt wird. Mit einer dominanten Anordnung eines bestimmten Druckschalters kann so auch die Betätigungsmöglichkeit für ein vorrangiges Funktionsteil eines angeschlossenen Dentalgerätes vorgegeben werden.

Weitere vorteilhafte und zweckmäßige Ausbildungen des erfindungsgemäßen Fußschalters sind in den einzelnen Patentansprüchen angegeben.

Ein Ausführungsbeispiel des erfindungsgemäßen Fußschalters ist in der Zeichnung schematisch dargestellt und wird nachfolgend näher beschrieben. Es zeigt
- Fig. 1: eine Draufsicht des Fußschalters,
- Fig. 2: eine Schnittansicht des Fußschalters nach der Linie A-A in Fig. 1,
- Fig. 3: eine Schnittansicht des Fußschalters nach der Linie B-B in Fig. 1,

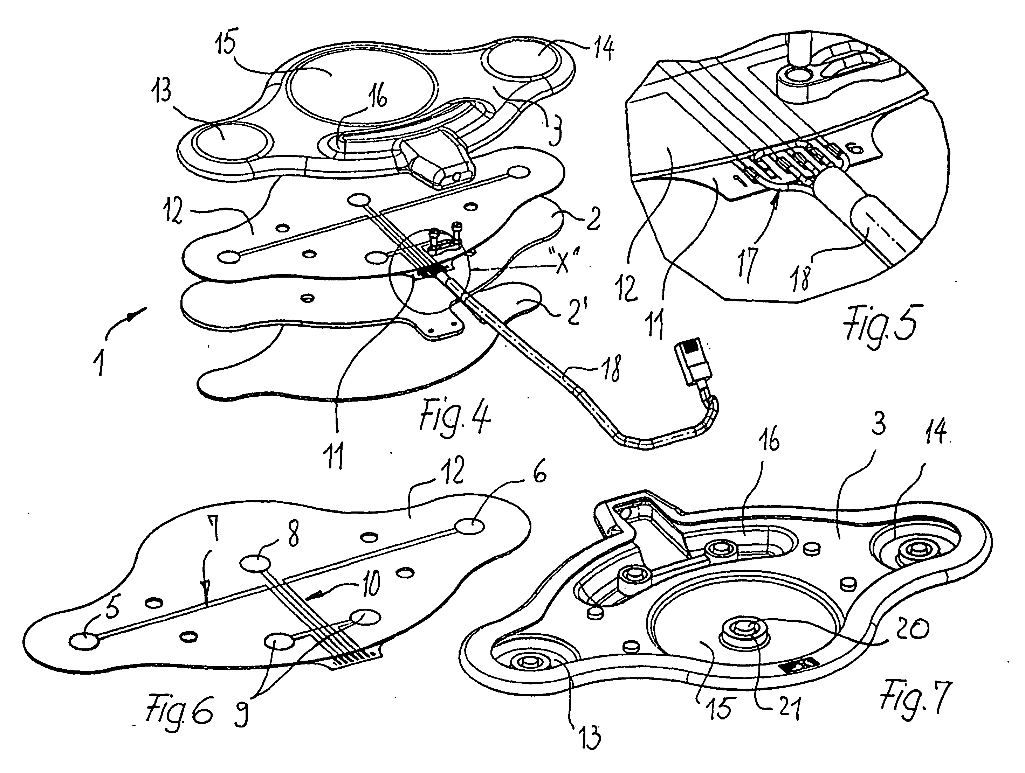

- Fig. 4: eine perspektivische Explosionsdarstellung des Fußschalters,
- Fig. 5: eine Detailansicht der in Fig. 4 gezeigten Einzelheit X,
- Fig. 6: eine Draufsicht auf die Leiterplatte des Fußschalters und
- Fig. 7: eine Innenansicht einer Abdeckplatte des Fußschalters.

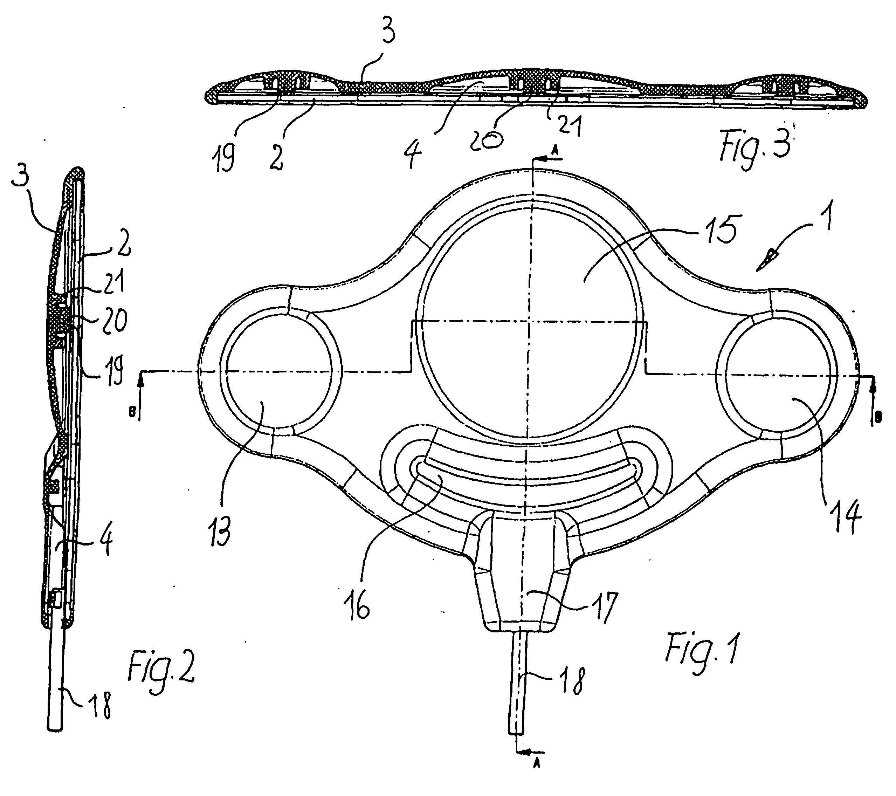

Der in Fig. 1 mit einer Draufsicht gezeigte Fußschalter ist mit einer im wesentlichen elliptisch bis rechteckigen Umrißform ausgebildet und für die Anordnung von insgesamt vier elektrischen Druckschaltern vorgesehen, um damit bei einem Dentalgerät mit einem bspw. mit Ultraschall arbeitenden Handstück verschiedene Betriebsbereiche schaltern zu können.

Der mit der Bezugsziffer 1 in seiner Gesamtheit bezeichnete Fußschalter ist mit einer Grundplatte 2 ausgebildet, die zur Auflage auf dem Fußboden in der Nähe eines mit dem Fußschalter operativ verbundenen Dentalgerätes bestimmt ist. Die Grundplatte 2 ist nach oben durch eine relativ bewegliche Abdeckplatte 3 abgedeckt, die aus einem biegeweichen Material, wie insbesondere einem relativ dünnen gummielastischen Material, besteht und randseitig mit der Grundplatte 2 fluiddicht verbunden, insbesondere verklebt ist. Die Abdeckplatte 3 ist in einem solchen Abstand zu der Grundplatte 2 angeordnet, daß zwischen den beiden Platten ein Hohlraum 4 vorhanden ist. Die Grundplatte 2 kann noch mit einer Gumminoppenplatte 2' unterlegt sein, um für den Fußschalter 1 eine rutschsichere Auflage zu erhalten.

Der Hohlraum 4 zwischen der Grundplatte 2 und der Abdeckplatte 3 wird für eine Anordnung von mehreren Druckschaltern genutzt. Zwei erste Druckschalter 5 und 6 sind dabei in einer Hauptachse 7 des Fußschalters 1 angeordnet. Zwei weitere Druckschalter 8 und 9 sind in einer Nebenachse 10 des Fußschalters angeordnet, wobei der Druckschalter 9 als ein Doppelschalter ausgebildet ist.

Alle Druckschalter sind gemäß der Darstellung in Fig. 5 mit einer gedruckten Leiterbahn an einer ersten Trägerfolie 11 ausgebildet, die mit einer zweiten Trägerfolie 12 randseitig fluiddicht verbunden ist. Das Paket dieser beiden Trägerfolien mit den einzelnen Druckschaltern weist eine Anordnung in dem Hohlraum 4 zwischen der Grundplatte 2 und der Abdeckplatte 3 auf. Die Abdeckplatte 3 ist an den Orten der Druckschalter mit etwa domförmigen Erhebungen 13, 14 und 15, 16 versehen, die eine individuelle Betätigungsmöglichkeit für die Druckschalter ergeben. Die domförmigen Erhebungen 13 und 14 der beiden Druckschalter 5 und 6 sind etwa gleich groß ausgebildet.

Mit dem Druckschalter 5 kann bsp. der eigentliche Ultraschallbetrieb eines für eine Zahnbehandlung verwendeten Handstückes ohne eine gleichzeitige Zuleitung von Wasser gesteuert werden. Mit dem Druckschalter 6 sollte dann andererseits eine bloße Wasserspülung der behandelten Zahnflächen ohne eine gleichzeitige Einschaltung des Ultraschallbetriebes gesteuert werden können. Mit dem für eine dominante Anordnung am Ort des größeren Betätigungsvorsprunges 15 vorgesehenen Druckschalter 8 wäre ein Ultraschallbetrieb des Handstückes mit einer gleichzeitigen Wasserspülung bei der Zahnbehandlung möglich. Mit dem als Doppelschalter ausgebildeten Druckschalter 9 am Ort des Betätigungsvorsprunges 16 könnte schließlich ein sogenannter Boost-Ultraschallbetrieb des Handstükkes mit einer geregelten Verstärkung des Ultraschalls gesteuert werden.

Die einzelnen Druckschalter respektive die gedruckten Leiterbahnen, die zur Ausbildung dieser Druckschalter vorgesehen sind, sind an einem gemeinsamen Anschluß 17 für eine Signalleitung 18 zusammengeführt. Über die Signalleitung 18 wird ein direkter Stromanschluß an elektrische bzw. elektronische Schaltsysteme der verschiedenen Funktionsteile des Dentalgerätes erhalten, die mit den an den Druckschaltern vorgesehenen Betätigungsbereichen der Abdeckplatte 3 gesteuert werden. Für jeden durch einen Druckschalter ausgelösten Schaltvorgang ist an der betreffenden Leiterbahn des Druckschalters eine Kontaktfeder 19 mit einer Anordnung zwischen den beiden Folien 11 und 12 vorgesehen, die durch die Ausübung eines Betätigungsdruckes auf die jeweils zugeordnete domförmige Erhebung aus einer inaktiven Ruheposition in eine aktive Schaltposition überführbar ist.

Die Kontaktfedern 19 sind als tellerförmige Klickfedern ausgebildet, die durch den an der Abdeckplatte 3 ausgeübten Betätigungsdruck mit einem Klickgeräusch in die Betätigungsfunktion für den zugeordneten Druckschalter bringbar sind und nach Aufhebung des Betätigungsdruckes wieder in ihre Ausgangslage zurückfedern. Damit eine Überlastung der Druckschalter respektive ihrer Kontaktfedern vermieden wird, ist bei jedem Betätigungsvorsprung an der Innenseite der Abdeckplatte 3 ein innerer Betätigungsdorn 20 ausgebildet, der zum Auslösen eines Schaltvorganges mit der jeweils zugeordneten Kontaktfeder 19 in Berührung gebracht werden kann. Der Betätigungsdorn 20 ist von einem äußeren Ringkörper 21 umgeben, welcher nach dem Auslösen des Schaltvorganges eine direkte Abstützung durch die Grundplatte 2 erfährt und damit die mit dem Betätigungsdorn 20 erhaltene Druckbelastung der Kontaktfeder 19 begrenzt. Es wird daher mit dieser Ausbildung eine einfache Überlastsicherung für den Druckschalter erreicht.

Der Fußschalter ist mit einer im wesentlichen elliptisch bis rechteckigen Umrißform ausgeführt. Für die beiden in der Hauptachse 7 angeordneten Druckschalter 5 und 6 werden daher weniger dominante Betätigungsbereiche der Abdeckplatte 3 an den zugeordneten Erhebungen 13 und 14 erhalten als für die beiden in der Nebenachse 10 angeordneten Druckschalter 8 und 9. Die dominanteren Betätigungsbereiche für die Druckschalter 8 und 9 erhalten dabei durch eine größere Ausbildung der Erhebungen 15 und 16 gleichzeitig eine augenfällige Hervorhebung im Verhältnis zu den gleich groß und kleiner ausgebildeten Erhebungen 13 und 14, die für die beiden Druckschalter 5 und 6 in der Hauptachse 7 vorgesehen sind. Durch die Anordnung der Druckschalter 5 und 6 in der Hauptachse des Fußschalters wird auch ein genügend großer Abstand von den beiden in der Nebenachse 10 angeordneten Druckschaltern 8 und 9 sicherstellt, sodaß fehlerhafte Schaltvorgänge weitgehend vermieden werden..

Der Fußschalter kann neben der Verwendung bei einem Dentalgerät mit einem mit Ultraschall arbeitenden Handstück auch eine Verwendung bei einem Pulverstrahlgerät erfahren. Ein erster Druckschalter kann dann bsp. für das Aktivieren eines Arbeitsstrahls aus Druckluft, Pulverteilchen und Wasser zum Austritt an einer Düsenanordnung des Handstückes, ein zweiter Druckschalter für eine Verstärkung des Druckes des Arbeitsstrahls, ein dritter Druckschalter für die Abgabe eines bloßen Luftstrahls und ein vierter Druckschalter für die Abgabe eines kombinierten Luft- und Wasserstrahls vorgesehen werden. Auch kann der Fußschalter mit ähnlich verteilten Kontrollfunktionen für einen dentalen Bohrantrieb vorgesehen werden.

Die Anordnung der Druckschalter in dem Hohlraum des Fußschalters kann zweckmäßig ergänzt werden mit einer Anordnung von elektrischen Kraftmeßsensoren. Solche elektrischen Kraftmeßsensoren sind in bekannter Weise mit einem elektrischen Widerstand ausgebildet, der in diesem Fall durch die Kraft einer Fußbetätigung des Fußschalters ein zu der Betätigungskraft proportionales Regel- bzw. Stellsignal für eine analoge Stellgröße eines betreffenden Funktionsteils bei dem angeschlossenen Dentalgerät liefert. Beispiele solcher Kraftmeßsensoren sind elektrisch leitende Elastomerelemente oder Schaumformteile. Als geeignete Kraftmeßsensoren können auch piezoelektrische Keramikscheiben oder piezoelektrische Polymerfolien mit nachgeschalteten elektronischen Ladungsverstärkern vorgesehen werden.

## Patentansprüche

1. Fußschalter, der zum Bedienen von wenigstens zwei verschiedenen Funktionsteilen eines mit ihm operativ verbundenen Dentalgerätes eingerichtet ist, bestehend aus
- einer Grundplatte (2), die zur.Auflage auf dem Fußboden in der Nähe des Dentalgerätes bestimmt ist,
- einer relativ zu der Grundplatte (2) beweglichen Abdeckplatte (3), die mit der Grundplatte zur randseitigen Abdichtung eines zwischen den beiden Platten (2,3) ausgebildeten Hohlraumes (4) fest und fluiddicht verbunden ist,
- einer zwischen dem Hohlraum (4) und den wenigstens zwei verschiedenen Funktionsteilen des Dentalgerätes verlaufenden Signalleitung (18), über welche bei einer Fußbetätigung der Abdeckplatte (3) funktionelle Schaltsignale weitergeleitet werden
**dadurch gekennzeichnet, daß**
- im Hohlraum (4) wenigstens zwei Druckschalter (5,6,8,9) angeordnet sind, die über die Signalleitung (18) einen direkten Stromanschluß an elektrische bzw. elektronische Schaltsysteme der wenigstens zwei verschiedenen Funktionsteile des Dentalgerätes aufweisen,
- die wenigstens zwei Druckschalter (5, 6, 8, 9) als Membranschalter ausgebildet sind mit jeweils einer gedruckten Leiterbahn in einer Anordnung zwischen zwei auf der Grundplatte (2) des Fußschalters (1) aufliegenden und randseitig miteinander fluiddicht verbundenen Trägerfolien (11, 12),
- jede gedruckte Leiterbahn eines Druckschalters (5, 6, 8, 9) eine zwischen den beiden Trägerfolien (11, 12) angeordnete Kontaktfeder (19) aufweist, die mit einer örtlich begrenzten Fußbetätigung der Abdeckplatte (3) am Ort des zugeordneten Druckschalters ein funktionelles Steuersignal für das mit dem Druckschalter verbundene Funktionsteil des Dentalgerätes auslöst.

2. Fußschalter nach Anspruch 1, bei welchem die Abdeckplatte (3) an den wenigstens zwei Druckschaltern (5, 6, 8, 9) mit domförmigen Betätigungsvorsprüngen (13, 14, 15, 16) ausgebildet ist.

3. Fußschalter nach Anspruch 2, bei welchem die domförmigen Betätigungsvorsprünge (13, 14, 15, 16) an den wenigstens zwei Druckschaltern (5, 6, 8, 9) unterschiedlich hoch ausgebildet sind.

4. Fußschalter nach Anspruch 2 oder 3, bei welchem jeder domförmigen Betätigungsvorsprung (13, 14, 15, 16) innerhalb eines inneren ringförmigen Sektors einen ersten Fußbetägigungsbereich (20) aufweist, über welchen die zugeordnete Kontaktfeder (19) in die Betätigungsfunktion für den zugeordneten Druckschalter (5, 6, 8, 9) bringbar ist, sowie innerhalb eines konzentrischen äußeren ringförmigen Sektors (21) einen zweiten Fußbetätigungsbereich, welcher mit einer Auflage dieses äußeren ringförmigen Sektors auf der Grundplatte (2) des Fußschalters (1) eine Überlastsicherung für den Druckschalter ergibt.

5. Fußschalter nach einem der Ansprüche 1 bis 4, bei welchem die Abdeckplatte (3) aus einem biegeweichen Material, wie insbesondere einem relativ dünnen gummielastischen Material, besteht, das randseitig mit der Grundplatte (2) des Fußschalters (1) fluiddicht verbunden, insbesondere verklebt ist.

6. Fußschalter nach einem der Ansprüche 1 bis 5, bei welchem jede Kontaktfeder (19) als eine tellerförmige Klickfeder ausgebildet ist, die mit einem Klickgeräusch in die Betätigungsfunktion für den zugeordneten Druckschalter (5, 6, 8, 9) bringbar ist und nach Aufhebung des über die Abdeckplatte (3) ausgeübten Fußbetätigungsdruckes wieder in ihre Ausgangslage zurückfedert.

7. Fußschalter nach einem der Ansprüche 1 bis 6, bei welchem in dem Hohlraum (4) zwischen der Grundplatte (2) und der Abdeckplatte (3) wenigstens ein elektrischer Kraftmeßsensor zusätzlich oder alternativ zu den wenigstens zwei Druckschaltern (5, 6, 8, 9) angeordnet ist, der einen elektrischen Widerstand aufweist, welcher durch die Kraft einer Fußbetätigung des Fußschalters (1) ein zu der Betätigungskraft proportionales Regel- bzw. Stellsignal für eine analoge Stellgröße eines Funktionsteils des Dentalgerätes liefert.

8. Fußschalter nach Anspruch 7, bei welchem der elektrische Kraftmeßsensor mit elektrisch leitenden Elastomerelementen oder mit Schaumformteilen ausgebildet ist.

9. Fußschalter nach Anspruch 7, bei welchem der elektrische Kraftmeßsensor mit piezoelektrischen Keramikscheiben oder mit piezoelektrischen Polymerfolien und nachgeschalteten elektronischen Ladungsverstärkern ausgebildet ist.

10. Fußschalter nach einem der Ansprüche 1 bis 9, bei welchem zur Verwendung bei einem Dentalgerät mit einem für die Zahnbehandlung vorgesehenen Handstück vier Druckschalter (5, 6, 8, 9) vorgesehen sind, von welchen ein erster Druckschalter (8) für die Steuerung einer aus zwei Anteilen bestehenden bestimmungsgemäßen Normalfunktion des Gerätes, ein zweiter Druckschalter (9) für die Schaltung einer regelbaren Verstärkungsfunktion, ein dritter Druckschalter (5) für die Steuerung nur eines ersten Anteils der bestimmungsgemäßen Normalfunktion des Gerätes und ein vierter Druckschalter (6) für die Steuerung nur des zweiten Anteils der bestimmungsgemäßen Normalfunktion des Gerätes vorgesehen ist.

11. Fußschalter nach Anspruch 10, bei welchem die ersten und zweiten Druckschalter (8, 9) für zwei dominante Betätigungsbereiche (15, 16) der Abdeckplatte (3) vorgesehen sind und die dritten und vierten Druckschalter (5, 6) eine davon räumlich abgesetzte Anordnung an zwei weniger dominanten Betätigungsbereichen (13, 14) der Abdeckplatte des Fußschalters (1) aufweisen.

12. Fußschalter nach Anspruch 10 oder 11, bei welchem die dominanten Betätigungsbereiche (15, 16) für die ersten und zweiten Druckschalter (8, 9) in einer Nebenachse (10) und die weniger dominanten Betätigungsbereiche (13, 14) für die dritten und vierten Druckschalter (5, 6) in einer Hauptachse (7) einer etwa elliptischen bis rechteckigen Umrißform des Fußschalters (1) jeweils zusammen mit einem Anschluß der Signalleitung (18) an den zugeordneten Druckschalter angeordnet sind.

13. Fußschalter nach einem der Ansprüche 10 bis 12, bei welchem die dominanten Betätigungsbereiche (15, 16) für die ersten und zweiten Druckschalter (8, 9) verschieden groß und mit einer ergonomisch unterschiedlichen Form ausgeführt sind.

14. Fußschalter nach einem der Ansprüche 10 bis 13, bei welchem die weniger dominanten Betätigungsbereiche (13, 14) für die dritten und vierten Druckschalter (5, 6) gleich groß und kleiner ausgeführt sind als die dominanten Betätigungsbereiche (15, 16) für die ersten und zweiten Druckschalter (8, 9).

15. Fußschalter nach einem der Ansprüche 10 bis 14, bei welchem zur Verwendung bei einem Dentalgerät mit einem mit Ultraschall arbeitenden Handstück der erste Druckschalter (8) für den Ultraschallbetrieb des Handstückes mit einer gleichzeitigen Zuleitung von Wasser an das Handstück, der zweite Druckschalter (9) für einen sogenannten Boost-Ultraschallbetrieb des Handstückes mit einer geregelten Verstärkung des Ultraschalls, der dritte Druckschalter (5) für den Ultraschallbetrieb des Handstückes ohne eine Zuleitung von Wasser und der vierte Druckschalter (6) für eine über das Handstück vermittelte Wasserspülung einer behandelten Zahnoberfläche ohne einen gleichzeitigen Ultraschallbetrieb des Handstückes vorgesehen ist.

16. Fußschalter nach einem der Ansprüche 10 bis 14, bei welchem zur Verwendung bei einem Pulverstrahlgerät der erste Druckschalter (8) zum Aktivieren eines Arbeitsstrahls aus Druckluft, Pulverteilchen und Wasser für einen Austritt an einer Düsenanordnung eines Handstückes, der zweite Druckschalter (9) für eine Verstärkung des Druckes des Arbeitsstrahls, der dritte Druckschalter (5) für die Abgabe nur eines Luftstrahls und der vierte Druckschalter (6) für die Abgabe eines kombinierten Luft- und Wasserstrahls über die Düsenanordnung des Handstückes vorgesehen ist.

## Claims

1. A foot switch adapted for actuating at least two different functional components of a dental apparatus operatively connected to the foot switch, comprising:
a base plate (2) for resting on the floor in the vicinity of the dental apparatus,
a cover plate (3) being movable relative to the base plate (2), the cover plate (3) being joined to the base plate firmly and in a fluid-tight manner at the rim, for sealing of a cavity (4) formed between the two plates (2, 3),
a signal line (18) running between the cavity (4) and the at least two different functional components of the dental apparatus, wherein functional switching signals are transmitted via the signal line upon foot actiuation of the cover plate (3),
**characterized in that**
a least two pressure switches (5, 6, 8, 9) are accommodated in the cavity (4), the pressure switches having a direct current connection to electric or electronic switching systems of the at least two different functional components of the dental apparatus via the signal line (18),
the at least two pressure switches (5, 6, 8, 9) are formed as membrane switches each having a printed strip conductor arranged between two carrier foils (11, 12) resting on the base plate (2) of the foot switch (1) and joined to each other in a fluid-tight manner at the rim,
each printed strip conductor of the pressure switch (5, 6, 8, 9) has a contact spring (19) between the two carrier foils (11, 12), the contact spring (19) triggering a functional control signal for the functional component of the dental apparatus connected with the pressure switch upon a locally confined foot actuation of the cover plate (3) at the location of the related pressure switch.

2. The foot switch of claim 1, wherein the cover plate (3) is formed with dome-shaped actuating elevations (13, 14, 15, 16) at the at least two pressure switches (5, 6, 8, 9).

3. The foot switch according to claim 2, wherein the dome-shaped actuating elevations (13, 14, 15, 16) at the least two pressure switches (5, 6, 8, 9) have different heights.

4. The foot switch according to claim 2 or 3, wherein each dome-shaped actuating elevations (13, 14, 15, 16) have a first foot actuating area (20) within its inner ring-shaped sector, wherein the related contact spring (19) may be brought into the actuating function for the related pressure switch (5, 6, 8, 9) via the foot actuating area, and a second foot actuating area within a concentric outer ring-shaped sector (21), forming an overload safeguard for the pressure switch with a rest of this outer ring-shaped sector on the base plate (2).

5. The foot switch according to one of claims 1 to 4, wherein the cover plate (3) consists of a flexible soft material, in particular a relatively thin rubber-like material, which is joined in particular glued, to the base plate (2) of the foot switch (1) at its rim in a fluid-tight manner.

6. The foot switch according to one of claims 1 to 5, wherein each contact spring (19) is constructed as a plate-shaped click spring, which may be brought into the actuating function for the related pressure switch (5, 6, 8, 9), thereby producing a click noise, and after removal of the foot actuating pressure exerted via the cover plate (3) resiliently returns in its original position.

7. The foot switch according to one of claims 1 to 6, wherein an electric force sensor is arranged in the cavity (4) between the base plate (2) and the cover plate (3) in addition or alternatively to the at least two pressure switches (5, 6, 8, 9), the force sensor having an electric resistance supplying a regulating or control signal proportional to the actuating force through the force of the foot actuation of the foot switch (1) for an analogue control variable of a functional component of the dental apparatus.

8. The foot switch of claim 1, wherein the electric force sensor is formed with electrically conducting elastomere elements or with foam-molded parts.

9. The foot switch of claim 7, wherein the electric force sensor is formed with piezoelectric ceramic plates or with piezoelectric polymer foils and connected electronic charge amplifiers.

10. The foot switch of one of claims 1 to 9, wherein four pressure switches (5, 6, 8, 9) are provided for use with a dental apparatus with a handpiece for dental treatments, wherein a first the four pressure switches (8) is provided for control of the intended normal function of the apparatus consisting of two components, a second (9) of the pressure switches is provided for switching an adjustable amplifying function, a third pressure switch (5) for controlling only a first component of the intended normal function of the apparatus, and a fourth pressure switch (6) for controlling only the second component of a intended normal function of the apparatus.

11. The foot switch of claim 10, wherein the first and second pressure switches (8, 9) are intended for two dominant actuating areas (15, 16) of the cover plate (3), and the third and fourth pressure switches (5, 6) have a spatially removed location at two less dominant actuating areas (13, 14) of the cover plate of the foot switch (1).

12. The foot switch according to claim 10 or 11, wherein the dominant actuating areas (15, 16) for the first and second pressure switches (8, 9) are located in a minor axis (10), and the less dominant actuating areas (13, 14) for the third and fourth pressure switches (5, 6) are located in a major axis (7) of an approximately elliptic to rectangular contour shape of the foot switch (1), each together with a connecting terminal of the signal line (18) at the related pressure switch.

13. The foot switch according to one of claims 10 to 12, wherein the dominating actuating areas (15, 16) for the first and second pressure switches (8, 9) have different size and an ergonomically different form.

14. The foot switch according to one of claims 10 to 13, wherein the less dominant actuating areas (13, 14) for the third and fourth pressure switches (5, 6) have the same size and smaller size, respectively, than the dominant actuating areas (15, 16) for the first and second pressure switches (8, 9).

15. The foot switch according to one of claims 10 to 14, wherein for use with a dental apparatus with a handpiece working with ultrasound, the first pressure switch (8) is provided for the ultrasound operation of the handpiece with a simultaneous supply of water to the handpiece, the second pressure switch (9) for a so-called boost-ultrasound operation of the handpiece with a regulated amplification of the ultrasound, the third pressure switch (5) for ultrasound operation of the handpiece without supply of water, and the fourth pressure switch (6) for a water rinsing of a treated tooth surface conveyed via the handpiece, without simultaneous ultrasound operation of the handpiece.

16. The foot switch according to one of claims 10 to 14, wherein for use with a powder blasting apparatus, the first pressure switch (8) is provided for activating a working jet of pressurized water, powder particles and water for discharged at a nozzle arrangement of the handpiece, the second pressure switch (9) for amplification of the pressure of the working jet, the third pressure switch (5) for discharge only of an air jet, and the fourth pressure switch (6) for discharge of a combined air and water jet via the nozzle arrangement of the handpiece.

## Revendications

1. Commutateur à pied, équipé pour commander au moins deux différents organes de service d'un appareil de dentiste relié à lui opérativement, comprenant
- une plaque de base (2), qui est destinée à l'assise au sol à proximité de l'appareil de dentiste,
- une plaque de recouvrement (3), qui est mobile par rapport à la plaque de base (2) et qui est reliée à ladite plaque de base de façon fixe et étanche aux fluides pour l'étanchéité des bords d'une cavité (4) formée entre les deux plaques (2, 3),
- un circuit d'acheminement des signaux (18) courant entre la cavité (4) et les au moins deux différents organes de service de l'appareil de dentiste, ledit circuit transmettant des signaux de commutation fonctionnels en cas d'actionnement de la plaque de recouvrement (3) par le pied,
**caractérisé en ce que**
- dans la cavité (4) sont disposés au moins deux interrupteurs manométriques (5, 6, 8, 9), qui présentent par l'intermédiaire du circuit d'acheminement des signaux (18) un raccordement électrique direct aux systèmes de commutation électriques ou électroniques des au moins deux différents organes de service de l'appareil de dentiste,
- les au moins deux interrupteurs manométriques (5, 6, 8, 9) sont conçus comme interrupteurs à membrane avec respectivement une piste conductive imprimée disposée entre deux feuilles supports (11, 12) reposant sur la plaque de base (2) du commutateur à pied (1) et reliées entre elles sur les bords de façon étanche aux fluides,
- chaque piste conductive imprimée d'un interrupteur manométrique (5, 6, 8, 9) présente un ressort de contact (19), qui est disposé entre les deux feuilles supports (11, 12) et qui déclenche avec un actionnement par le pied, localement limité, de la plaque de recouvrement (3) à l'emplacement de l'interrupteur manométrique correspondant, un signal de commande fonctionnel pour l'organe de service - de l'appareil de dentiste - relié à l'interrupteur manométrique.

2. Commutateur à pied selon la revendication 1, dans lequel la plaque de recouvrement (3) est conçue sur les au moins deux interrupteurs manométriques (5, 6, 8, 9) avec des saillies de commande en forme de dômes (13, 14, 15, 16).

3. Commutateur à pied selon la revendication 2, dans lequel les saillies de commande en forme de dômes (13, 14, 15, 16) sont conçues de hauteur différente sur les au moins deux interrupteurs manométriques (5, 6, 8, 9).

4. Commutateur à pied selon la revendication 2 ou 3, dans lequel chaque saillie de commande en forme de dôme (13, 14, 15, 16) présente à l'intérieur d'un secteur intérieur annulaire une première zone de commande au pied (20), par laquelle on amène le ressort de contact correspondant (19) dans la fonction de commande pour l'interrupteur manométrique correspondant (5, 6, 8, 9), ainsi qu'à l'intérieur d'un secteur concentrique extérieur annulaire (21) une deuxième zone de commande au pied, laquelle fournit une protection contre les surcharges pour l'interrupteur manométrique grâce à l'assise de ce secteur extérieur annulaire sur la plaque de base (2) du commutateur à pied (1).

5. Commutateur à pied selon l'une des revendications 1 à 4, dans lequel la plaque de recouvrement (3) est fabriquée dans un matériau flexible, comme notamment un matériau en caoutchouc élastique relativement mince, qui est relié sur les bords, notamment collé, à la plaque de base (2) du commutateur à pied (1) de façon étanche aux fluides.

6. Commutateur à pied selon l'une des revendications 1 à 5, dans lequel chaque ressort de contact (19) est conçu comme un ressort à déclic en forme de plateau, qui est amené avec un bruit de déclic dans la fonction de commande pour l'interrupteur manométrique correspondant (5, 6, 8, 9), et qui revient dans sa position initiale quand la pression de commande au pied exercée sur la plaque de recouvrement (3) est supprimée.

7. Commutateur à pied selon l'une des revendications 1 à 6, dans lequel est disposé dans la cavité (4) entre la plaque de base (2) et la plaque de recouvrement (3) au moins un capteur dynamométrique électrique en plus ou en remplacement des au moins deux interrupteurs manométriques (5, 6, 8, 9), ledit capteur présentant une résistance électrique qui fournit, par la force d'un actionnement du commutateur à pied (1) par le pied, un signal d'action ou de commande proportionnel à la force de commande, pour une grandeur de commande analogique d'un organe de service de l'appareil de dentiste.

8. Commutateur à pied selon la revendication 7, dans lequel le capteur dynamométrique électrique est conçu avec des éléments élastomères électriquement conducteurs ou avec des pièces moulées en mousse.

9. Commutateur à pied selon la revendication 7, dans lequel le capteur dynamométrique électrique est conçu avec des disques céramiques piézoélectriques ou avec des feuilles polymères piézoélectriques et des amplificateurs de charge électroniques montés en aval.

10. Commutateur à pied selon l'une des revendications 1 à 9, dans lequel sont prévus quatre interrupteurs manométriques (5, 6, 8, 9) pour l'utilisation dans un appareil de dentiste équipé d'un porte-outil prévu pour le soin dentaire, le premier interrupteur manométrique (8) étant prévu pour la commande d'une fonction normale de l'appareil composée de deux parties, le deuxième interrupteur manométrique (9) pour la commutation d'une fonction amplificatrice réglable, le troisième interrupteur manométrique (5) pour là commande de seulement une première partie de la fonction normale de l'appareil et le quatrième interrupteur manométrique (6) pour la commande de seulement la deuxième partie de la fonction normale de l'appareil.

11. Commutateur à pied selon la revendication 10, dans lequel les premier et deuxième interrupteurs manométriques (8, 9) sont prévus pour deux zones de commande dominantes (15, 16) de la plaque de recouvrement (3), et les troisième et quatrième interrupteurs manométriques (5, 6) sont disposés spatialement à part sur deux zones de commande moins dominantes (13, 14) de la plaque de recouvrement du commutateur à pied (1).

12. Commutateur à pied selon la revendication 10 ou 11, dans lequel les zones de commande dominantes (15, 16) pour les premier et deuxième interrupteurs manométriques (8, 9) sont disposées dans un petit axe (10) et les zones de commande moins dominantes (13, 14) pour les troisième et quatrième interrupteurs manométriques (5, 6) dans un grand axe (7) d'un contour approximativement elliptique à rectangulaire du commutateur à pied (1), lesdites zones présentant un raccordement commun du circuit d'acheminement des signaux (18) à l'interrupteur manométrique correspondant.

13. Commutateur à pied selon l'une des revendications 10 à 12, dans lequel les zones de commande dominantes (15, 16) pour les premier et deuxième interrupteurs manométriques (8, 9) sont conçues de dimension différente et de forme ergonomiquement différente.

14. Commutateur à pied selon l'une des revendications 10 à 13, dans lequel les zones de commande moins dominantes (13, 14) pour les troisième et quatrième interrupteurs manométriques (5, 6) sont conçues de dimension égale et plus petites que les zones de commande dominantes (15, 16) pour les premier et deuxième interrupteurs manométriques (8, 9).

15. Commutateur à pied selon l'une des revendications 10 à 14 dans lequel, pour l'utilisation dans un appareil de dentiste équipé d'un porte-outil fonctionnant aux ultrasons, le premier interrupteur manométrique (8) est prévu pour le fonctionnement ultrasonique du porte-outil avec amenée simultanée d'eau au porte-outil, le deuxième interrupteur manométrique (9) pour un fonctionnement ultrasonique dit boosté du porte-outil avec amplification régulée des ultrasons, le troisième interrupteur manométrique (5) pour le fonctionnement ultrasonique du porte-outil sans amenée d'eau, et le quatrième interrupteur manométrique (6) pour un rinçage à l'eau, acheminé par le porte-outil, d'une surface de dent soignée, sans fonctionnement ultrasonique simultané du porte-outil.

16. Commutateur à pied selon l'une des revendications 10 à 14 dans lequel, pour l'utilisation dans un appareil à jet de poudre, le premier interrupteur manométrique (8) est prévu pour activer un jet de travail composé d'air comprimé, de particules de poudre et d'eau pour une sortie sur un agencement de buses d'un porte-outil, le deuxième interrupteur manométrique (9) pour une amplification de la pression du jet de travail, le troisième interrupteur manométrique (5) pour l'émission de seulement un jet d'air, et le quatrième interrupteur manométrique (6) pour l'émission d'un jet combiné d'air et d'eau par l'agencement de buses du porte-outil.
